# FASCICULE DE BREVET EUROPEEN

(11) **EP 0 705 447 B1**
(45) Date de publication et mention de la délivrance du brevet: **06.08.1997**
(21) Numéro de dépôt: 94919735.4
(22) Date de dépôt: 20.06.1994
(51) Int. Cl.: G01V 3/02

(54) **PROCEDE ET DISPOSITIF POUR DETECTER ET IDENTIFIER DES CABLES ELECTRIQUES**
VERFAHREN UND VORRICHTUNG ZUM NACHWEIS UND ZUR IDENTIFIZIERUNG VON ELEKTRISCHEN KABELN
METHOD AND DEVICE FOR SENSING AND IDENTIFYING ELECTRICAL CABLES

(30) Priorité: 21.06.1993 FR 9307461; 23.03.1994 FR 9403415
(43) Date de publication de la demande: 10.04.1996
(73) Titulaire: ELECTRICITE DE FRANCE, 75008 Paris (FR); ASSOCIATION INTER-PROFESSIONNELLE DE FRANCE POUR LA PREVENTION DES ACCIDENTS ET DE L' INCENDIE, 59113 Seclin (FR)
(72) Inventeur: RICQ, Sana, F-01800 Meximieux (FR); EGEA, Dominique, F-69006 Lyon (FR); AUTRICQUE, Michel, F-59320 Haubourdin (FR)
(74) Mandataire: Martin, Jean-Jacques
(86) Numéro de dépôt international: FR9400740
(87) Numéro de publication internationale: WO9500863

(56) Documents cités:
- DE-A- 3 216 263
- DE-A- 3 708 968
- US-A- 3 991 363

## Description

La présente invention concerne un procédé et un dispositif pour détecter la présence et, le cas échéant, identifier des câbles électriques comprenant une armature conductrice et une âme conductrice isolée de l'armature.

Lorsque de tels câbles électriques sont groupés pour former un faisceau de câbles s'étendant sur une grande longueur, un suivi visuel individuel des câbles du faisceau n'est plus possible et une technique courante pour identifier un câble donné, aux extrémités du faisceau, consiste à relier l'armature et l'âme de ce câble à une extrémité du faisceau de façon à former une boucle conductrice et à détecter, à l'autre extrémité du faisceau, pour chaque câble, s'il y a passage ou non de courant entre l'armature et l'âme du câble testé. Cette technique nécessite qu'un contact électrique soit établi avec l'âme et avec l'armature du câble à l'emplacement de détection et interdit l'utilisation du câble pendant la durée nécessaire à son identification. Cet inconvénient ne permet pas l'emploi de cette technique pour l'identification, notamment dans les centrales nucléaires, de câbles importants pour la sûreté et qu'il est inconcevable de débrancher, par exemple des câbles reliant des capteurs mesurant des paramètres essentiels pour la sécurité de la centrale à un équipement de contrôle.

Ces câbles importants pour la sécurité sont en outre redondants. Lorsque ceux-ci ont des parcours différents et traversent des zones respectives entre lesquelles un incendie n'est pas susceptible de se propager, on considère qu'il n'est pas nécessaire de protéger spécifiquement contre l'incendie l'un des câbles. Par contre, lorsque tous les câbles redondants sont susceptibles d'être endommagés par l'incendie d'une même zone, il est nécessaire de protéger au moins l'un d'entre eux contre l'incendie. La technique connue décrite plus haut pour identifier les câbles ne permet pas de détecter la présence d'un câble donné dans un local, et de déterminer par conséquent quel est le parcours suivi par ce câble, en vue de le protéger ou non contre l'incendie.

Des dispositifs pour détecter la présence de câbles enterrés ont été proposés. La publication allemande DE-32 16 263 décrit un dispositif comprenant un générateur à relier à un câble enterré et un détecteur apte à indiquer la présence du câble à proximité. Le signal émis sur le câble est un signal basse fréquence sinusoïdal de l'ordre de quelques centaines de Hz et l'usage de ce dispositif reste limité à la détection de câbles sur de faibles longueurs et dans des environnements peu perturbés radioélectriquement. En outre, ce dispositif peut présenter sur des installations en service un risque car la basse fréquence utilisée peut perturber les signaux véhiculés par des câbles de types contrôle et mesure, voire endommager les dispositifs électroniques associés. Dans le document DE-A-3708968, un dispositif similaire applique un train d'ondes sinusoïdales asymétriques, de fréquence acoustique, sur l'âme d'un câble pour le détecter.

Un premier objet de la présente invention est de permettre de détecter à distance la présence ou non d'un câble donné, sans perturber le fonctionnement des installations que relie ce câble dans le cas particulier où il est en service.

Un autre objet de l'invention est de permettre, le cas échéant, d'identifier aisément et rapidement un câble donné.

La présente invention y parvient grâce à un procédé pour détecter la présence d'un câble électrique et, le cas échéant, l'identifier, ce câble électrique comprenant une armature conductrice et une âme conductrice isolée électriquement de l'armature. De façon caractéristique on relie ladite armature à la terre, on émet une impulsion de courant sur l'armature au moyen d'un dispositif injecteur de courant relié à la terre de sorte que le retour de cette impulsion vers le dispositif injecteur s'effectue par la terre et on détecte la présence dudit câble électrique à proximité d'un point de réception par la détection, au moyen d'un détecteur, d'un signal représentatif de cette impulsion en ce point de réception. Pour identifier le câble, on utilise de préférence un bobinage placé sur le trajet même de l'impulsion de courant, c'est-à-dire un bobinage traversé par le câble. Dans la pratique, l'armature du câble est le plus souvent reliée en permanence à la terre. La nature impulsionnelle du signal émis permet de ne pas perturber des installations en service reliées au câble et de pouvoir détecter et identifier un câble donné sur de grandes longueurs, même dans un milieu radioélectriquement perturbé comme celui d'une centrale nucléaire.

D'autres caractéristiques et avantages de la présente invention apparaîtront à la lecture de la description qui va suivre, d'un exemple de réalisation non limitatif de l'invention et à l'examen du dessin annexé sur lequel :
- les figures 1 et 2 illustrent deux variantes de mise en oeuvre du procédé selon la présente invention, pour l'identification d'un câble,
- la figure 3 est un schéma d'un dispositif injecteur de courant conforme à la présente invention,
- la figure 4 est un schéma d'un dispositif détecteur conforme à la présente invention, pour l'identification d'un câble,
- les figures 5 et 6 illustrent deux autres variantes de mise en oeuvre du procédé selon la présente invention pour détecter à distance la présence d'un câble donné,
- la figure 7 est un schéma d'un détecteur conforme à la présente invention, pour détecter à distance la présence d'un câble, et
- la figure 8 est un schéma d'un préamplificateur équipant le détecteur représenté sur la figure 7.

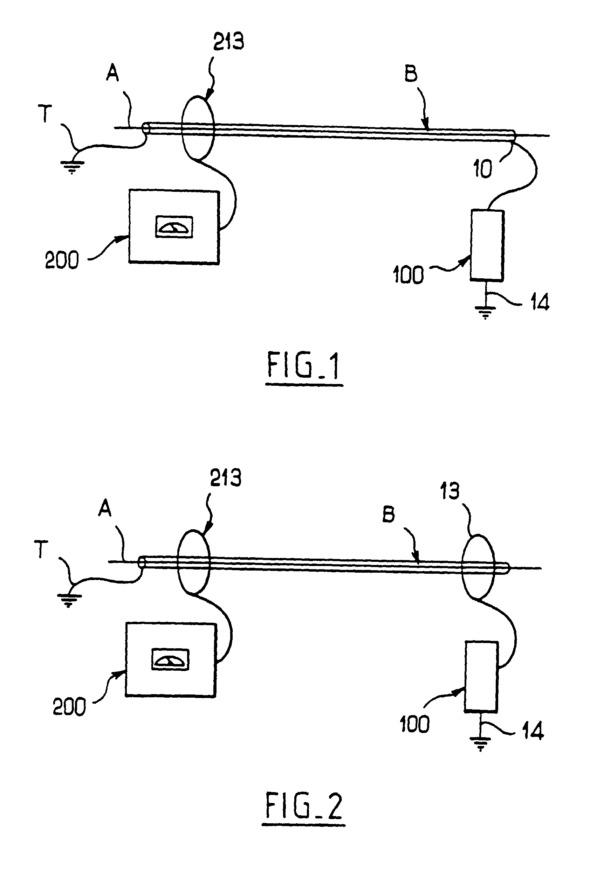

On a désigné sur les figures 1 et 2 par A l'âme conductrice d'un câble électrique et par B son armature. Dans l'exemple de réalisation décrit sur ces figures, le câble est partiellement représenté et l'âme conductrice A est destinée à véhiculer une information électrique tandis que l'armature B sert de blindage électromagnétique. Dans la présente invention, le terme "armature" doit s'entendre au sens large et peut désigner également un conducteur électrique libre du câble, n'ayant pas un rôle de blindage électromagnétique. De même, l'expression "âme conductrice" doit s'entendre au sens large comme désignant tout conducteur électrique du câble.

Conformément au procédé selon l'invention, on relie l'armature B en un point à la terre T, on émet une impulsion de courant sur l'armature B au moyen d'un dispositif injecteur de courant 100 relié en 14 à la terre et l'on détecte en un point de réception situé à proximité du trajet de l'impulsion, au moyen d'un détecteur 200, un signal représentatif de cette impulsion. En plaçant le détecteur 200 sur le trajet même de l'impulsion, on peut identifier le câble, comme cela va maintenant être décrit.

L'émission de l'impulsion de courant peut s'effectuer par injection directe sur l'armature B du câble, par contact électrique en 10 entre un conducteur relié au dispositif injecteur de courant 100 et l'armature B, comme représenté sur la figure 1. L'émission de courant peut également se faire sans contact électrique direct, par induction, au moyen d'un bobinage 13 relié au dispositif injecteur 100 et dont la ou les spires s'étendent autour du câble. L'émission sans contact direct permet d'induire un courant dont la variation par rapport au temps est moindre, par exemple d'un facteur 200, que dans le cas de l'injection directe. On évite ainsi avantageusement les risques de perturbation des installations électriques reliées au câble sur lequel on émet. De préférence, le bobinage 13 est réalisé au moyen d'une pince ampèremétrique comportant deux branches en forme de demi-cercle, articulées à une extrémité, adaptées à former une spire en position fermée. La mise en place de la pince sur le câble s'effectue en écartant les branches.

La détection d'un signal représentatif de l'impulsion s'effectue avantageusement sans contact électrique direct avec l'armature du câble, par induction, au moyen d'un bobinage relié au détecteur 200. Ce bobinage peut être constitué d'un cadre bobiné placé près du câble mais de préférence, pour l'identification, on utilise une pince ampèremétrique 213, le câble traversant la spire formée par les branches de la pince. Conformément à une caractéristique avantageuse de l'invention, l'intensité maximale du courant induit sur le câble est limitée à 25 A et la durée de l'impulsion est inférieure à 10 µs, de préférence voisine de 5 µs, de façon à ne pas perturber le fonctionnement des installations électriques reliées à l'âme A du câble.

On peut émettre sur plusieurs câbles au moyen de dispositifs injecteurs 100 réglés sur des cadences différentes et/ou avec des polarités inversées et identifier les câbles au moyen d'un unique détecteur 200, en mesurant les intervalles de temps séparant deux impulsions consécutives pour un câble donné. De préférence, on veillera à ce que l'intervalle de temps séparant chaque émission d'impulsion soit supérieur à 1 seconde de façon à ne pas perturber le fonctionnement des installations reliées à l'âme A du câble. Selon une autre caractéristique avantageuse de l'invention, l'émission de ladite impulsion de courant s'effectue à une cadence comprise entre 13 et 23 impulsions par minute.

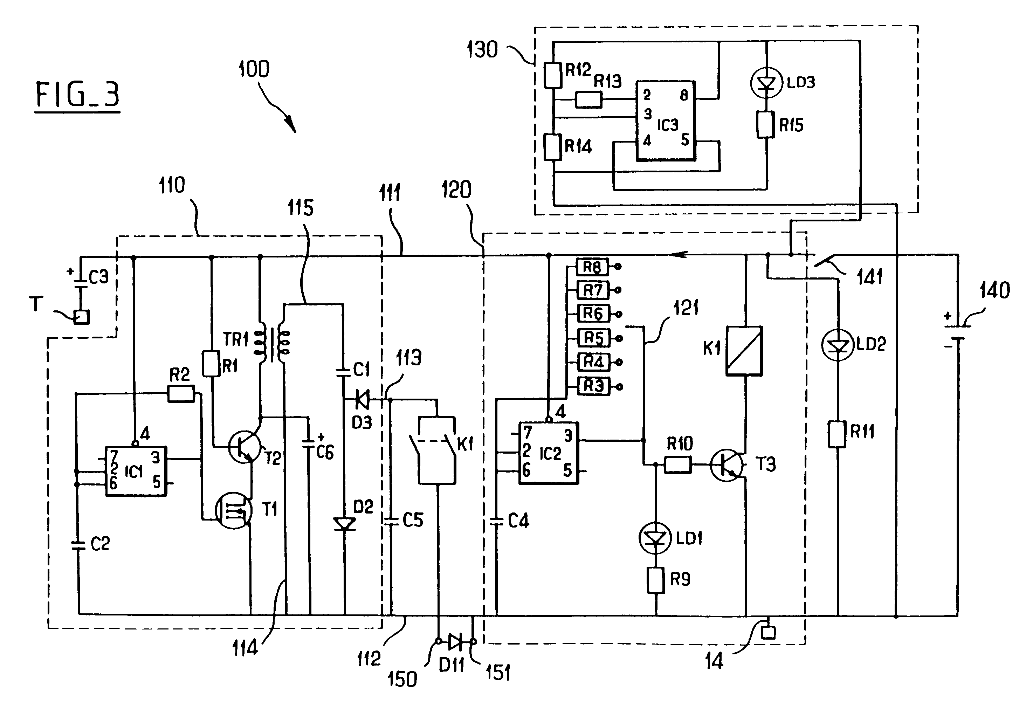

Le dispositif d'injection de courant 100 dont on a représenté le schéma sur la figure 3 comprend un convertisseur de tension 110 alimenté en 111 et 112 sous une faible tension par une source de tension continue 140, constituée dans l'exemple de réalisation décrit par une batterie 6V de capacité 2Ah. Le convertisseur 110 délivre en 113 une tension redressée de valeur élevée, de l'ordre de 350V, destinée à la charge d'un condensateur C5 relié en 113 au convertisseur et en 112 à la borne négative de la source de tension continue 140. Dans l'exemple de réalisation décrit, le condensateur C5 est non polarisé, présente une capacité de 1 µF et une tension d'isolation de 400V. On peut bien entendu placer en série avec la résistance R1 un potentiomètre pour ajuster le courant de charge du condensateur et la quantité d'électricité emmagasinée par ce dernier.

Le convertisseur 110 comporte un oscillateur destiné à alimenter le primaire d'un transformateur élévateur de tension TR1 dont le secondaire est relié en 114 à la borne négative de la source 140 et en 115 à un doubleur de tension, comprenant un condensateur C1 et deux diodes D2, D3 agencées de façon connue en soi. Plus précisément, la cathode de la diode D3 est reliée au condensateur C1 et l'anode de la diode D3 correspond à la sortie 113 du convertisseur 110. L'anode de la diode D2 est reliée à la cathode de la diode D3 et la cathode de la diode D2 est reliée à la borne négative de la source 140. Le condensateur C1 est relié par une armature aux diodes D2 et D3 et par l'autre armature, en 115, au secondaire du transformateur TR1.

L'oscillateur précité alimentant le primaire du transformateur TR1 comporte un circuit intégré spécialisé IC1 du type bien connu de l'homme de métier sous la simple référence "555". Les broches 2 et 6 du circuit intégré IC1 sont reliées ensemble et à une armature d'un condensateur C2, l'autre armature de ce condensateur étant reliée à la borne négative de la source 140. La broche 4 du circuit intégré IC1 est reliée à la borne positive de la source 140. La sortie 3 du circuit IC1 est reliée à la grille d'un transistor MOS-FET T1 et par l'intermédiaire d'une résistance R2 aux broches 2 et 6. Le transistor T1 travaille en commutation entre la borne négative de la source 140 et l'émetteur d'un transistor bipolaire T2 du type npn, travaillant en limiteur de courant, dont la base est reliée au travers d'une résistance R1 à la borne positive de la source 140. Le collecteur du transistor T2 alimente le primaire du transformateur TR1, relié par ailleurs à la borne positive de la source 140. Un condensateur polarisé est monté entre le collecteur de T2 et la borne négative de la source 140. A titre indicatif, dans l'exemple de réalisation décrit, les valeurs de C1, C2, C6, R1 et R2 sont les suivantes : C1 = 220 nF, C2 = 100 nF, C6 = 10 µF, R1 = 820 Ω et R2 = 1 MΩ. Le transistor T1 est du type connu sous la référence "BS 170" et T2 est du type connu sous la référence "BD 139".

Un condensateur C3 d'antiparasitage est monté entre la borne positive de la source 140 et la terre T. La borne négative de la source 140 est reliée en 14 à la terre T.

Conformément à une caractéristique avantageuse de la présente invention, l'impulsion de courant envoyée sur l'armature du conducteur B du câble est générée par la décharge du condensateur C5. A cet effet, les armatures du condensateur C5 sont reliées respectivement à deux bornes d'utilisation 150 et 151. La borne 151 est reliée à la borne négative de la source 140, donc à la terre. La borne 150 est reliée par l'intermédiaire d'un relais K1 à l'armature du condensateur C5 reliée en 113 à la sortie du convertisseur 110. Une diode D11 est montée entre les bornes 150 et 151 pour protéger les contacts du relais K1.

Le relais K1 est commandé en commutation par un cadenceur 120 destiné à provoquer la fermeture du relais K1 à des intervalles de temps déterminés et connecter de ce fait la borne 150 à l'armature du condensateur C5 reliée en 113 au convertisseur 110.

Le cadenceur 120 comprend un oscillateur astable constitué dans l'exemple de réalisation décrit par un circuit intégré spécialisé IC2 du même type que IC1. Les broches 2 et 6 du circuit intégré IC2 sont reliées entre elles et à une armature d'un condensateur C4 dont l'autre armature est reliée à la borne négative de la source 140. La broche 4 est reliée à la borne positive de la source 140. La sortie 3 de IC2 agit, par l'intermédiaire d'une résistance R10, sur la base d'un transistor T3 fonctionnant en commutation pour commander le relais K1, et la sortie 3 est reliée aux broches 2 et 6 de IC2 par l'intermédiaire d'un sélecteur 121 associé à un réseau de résistances de différentes valeurs R3, R4, R5, R6, R7, R8. L'utilisateur sélectionne l'une des résistances R3 à R8 et choisit ainsi la valeur de la résistance reliant la sortie 3 aux broches 2 et 6 de IC2, donc la cadence avec laquelle le relais K1 se ferme et la cadence avec laquelle les impulsions sont émises sur l'armature B du câble. Une diode électroluminescente LD1, montée en série avec une résistance R9 entre la sortie 3 de IC2 et la borne négative de la source 140, indique à l'utilisateur les périodes pendant lesquelles le relais K1 est alimenté. A titre indicatif, les valeurs de R3, R4, R5, R6, R7, R8 sont, dans l'exemple de réalisation décrit : R3 = 38 KΩ, R4 = 82 KΩ, R5 = 120 KΩ, R6 = 180 KΩ, R7 = 220 KΩ, R8 = 330 KΩ. La capacité de C4 vaut, dans l'exemple de réalisation décrit 10 µF, la résistance de R10 vaut 6,8 KΩ et T3 est du type "2N2222".

Avantageusement, comme représenté, un interrupteur 141 de marche / arrêt est monté en série avec la borne positive de la source 140. Une diode électroluminescente LD2 est montée en série avec une résistance R11 entre la borne positive de la source 140 et la borne négative, en aval de l'interrupteur 141, pour signaler à l'utilisateur la mise sous tension du dispositif d'injection de courant 100. Lorsque la source 140 est constituée par une batterie, le dispositif injecteur comporte en outre avantageusement, comme représenté, un indicateur 130 de l'état de cette batterie, réalisé de façon connue en soi au moyen d'un circuit intégré spécialisé IC3 du type "8211", de résistances R12, R13, R14, R15 et d'une diode électroluminescente LD3.

La borne 150 est reliée, selon le mode d'émission, directement au câble ou à une pince ampèremétrique, comme décrit plus haut.

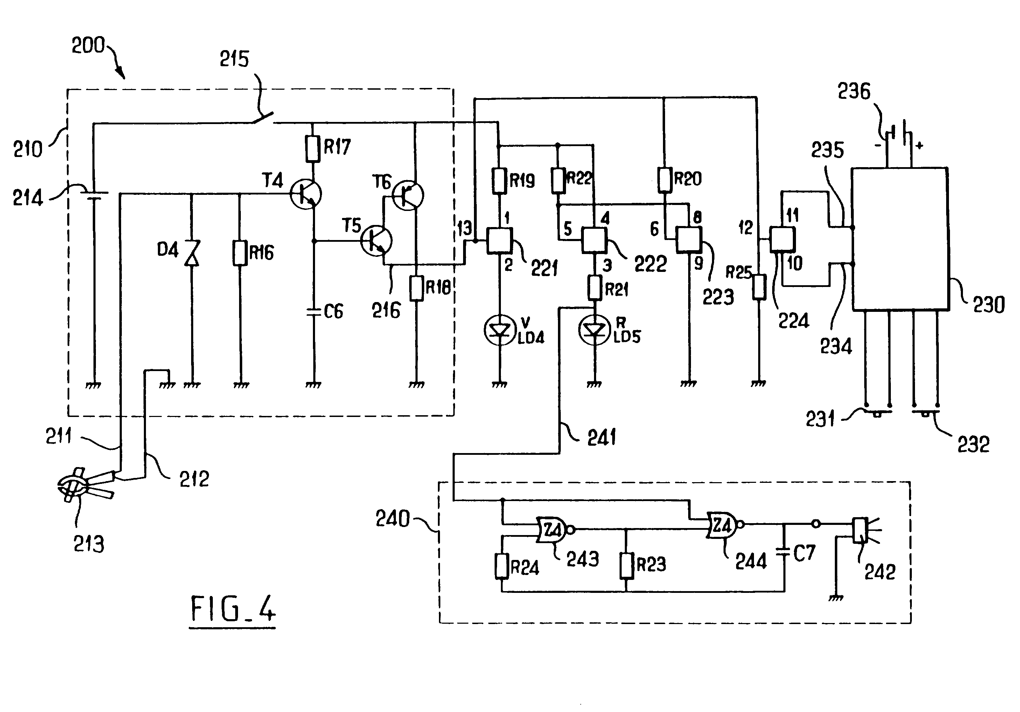

On a représenté sur la figure 4 le schéma d'un détecteur 200 conforme à l'invention. Le détecteur 200 comprend un circuit amplificateur de courant 210 alimenté par une source de tension continue 214 au travers d'un interrupteur 215. Le circuit amplificateur 210 reçoit en entrée en 211 et 212 un signal à amplifier, délivré par le bobinage 213 précité. Avantageusement, ce bobinage 213 comporte une seule spire, réalisée comme représenté au moyen d'une pince ampèremétrique 213. La pince 213 est reliée en 212 à la borne négative de la source 214 et en 211 à la base d'un transistor bipolaire du type npn T4. Le signal envoyé sur la base du transistor T4 est écrêté au moyen d'une diode Zéner D4 montée en parallèle avec une résistance R16 entre la base du transistor T4 et la borne négative de la source 214. Le collecteur du transistor T4 est relié par une résistance R17 à la borne positive de la source 214 et l'émetteur du transistor T4 est relié à une armature d'un condensateur de découplage C6 dont l'autre armature est reliée à la borne négative de la source 214. L'émetteur du transistor T4 est relié par ailleurs à la base d'un premier transistor T5 d'une paire de transistors bipolaires T5 et T6 montés en cascade. Plus précisément le transistor T6, de type pnp, est relié par son émetteur à la borne positive de la source 214, par sa base au collecteur du transistor T5 de type npn et par son émetteur, par l'intermédiaire d'une résistance R18, à la borne négative de la source 214. Le signal amplifié est délivré en 216 par l'émetteur du transistor T5. A titre indicatif, les résistances R16, R17 et R18 ont pour valeur, dans l'exemple de réalisation décrit : R16 = 22 KΩ, R17 = 27 KΩ, R18 = 1 KΩ. D4 est une diode Zéner 12 V, C6 a pour capacité 10 nF, et T4, T5 sont du type "BC 547".

Le signal amplifié délivré en 216 est envoyé sur la broche 13 d'un circuit intégré spécialisé du type "CD 4066". Ce circuit comporte quatre interrupteurs reférencés 221, 222, 223 et 224 respectivement commandés en commutation par application d'une tension positive supérieure à un seuil donné sur les broches 13, 5, 6 et 12, dites broches de commutation. L'interrupteur 221 reçoit par la broche 13 le signal délivré par l'émetteur du transistor T5 et lorsque la tension de ce signal dépasse un seuil donné, correspondant à la détection de l'impulsion émise par l'injecteur de courant sur le câble traversant la pince ampèremétrique 213, il se comporte comme un interrupteur fermé entre les broches 1 et 2. La broche 1 est reliée par une résistance R19 à la borne positive de la source 214 et la broche 2 est reliée à une diode électroluminescente verte LD4 destinée à indiquer à l'utilisateur que l'impulsion émise par l'injecteur de courant est détectée et que le câble sur lequel a été effectuée l'injection de courant correspond au câble qui traverse la pince ampèremétrique 213. L'allumage de la diode LD4 s'accompagne avantageusement par l'émission d'un signal sonore comme cela va être décrit dans la suite.

L'émetteur du transistor T5 est relié par l'intermédiaire d'une résistance R20 à la broche de commutation 6 de l'interrupteur 223. La broche 8 de l'interrupteur 223 est reliée à la broche de commutation 5 de l'interrupteur 222 et la broche 9 de l'interrupteur 223 est reliée à la borne négative de la source 214 de sorte que, lors de la détection d'un signal entraînant l'allumage de la diode LD4, l'interrupteur 223 se comporte comme n interrupteur fermé entre les broches 8 et 9 et relie à la borne négative de la source 214 la broche 5 de l'interrupteur 222. Celui-ci se comporte alors comme un interrupteur ouvert entre les broches 3 et 4. La broche 4 de l'interrupteur 222 est reliée à la borne positive de la source 214 et la broche 3 de l'interupteur 222 est reliée par l'intermédiaire d'une résistance R21 à l'anode d'une diode électroluminescente LD5 rouge dont la cathode est reliée à la borne négative de la source 214. Grâce à la résistance R22 reliant la broche 5 à la borne positive de la source 214, en l'absence de détection d'un signal représentatif de l'impulsion envoyée sur l'armature du câble, donc en l'absence de l'allumage de la diode électroluminescente verte LD4 l'interrupteur 222 se comporte comme un interrupteur fermé entre le broches 3 et 4 et commande l'allumage de la diode électroluminescente rouge LD5. Lors de la détection d'un signal représentatif de l'impulsion envoyée sur le câble, une tension positive supérieure à un seuil donné apparaît en 216 sur la broche 13 de l'interrupteur 221 et commande celui-ci de sorte qu'il se comporte comme un interrupteur fermé entre les broches 1 et 2. Par ailleurs cette tension positive délivrée en 216 est envoyée au travers de la résistance R20 sur la broche 6 de l'interrupteur 223. Ce dernier se comportant alors comme un interrupteur fermé entre les broches 8 et 9, relie la broche 5 de commutation de l'interrupteur 222 à la borne négative de la source 214. L'interrupteur 222 se comporte alors comme un interrupteur ouvert entre le broches 3 et 4 et l'anode de la diode électroluminescente LD5 se trouve pratiquement au potentiel de la borne négative de la source 214.

Un multivibrateur astable 240 est relié en 241 à l'anode de la diode électroluminescente rouge LD5. Ce multivibrateur 240 est relié à un dispositif piézoélectrique 242 destiné à émettre un signal sonore lorsque le potentiel de la cathode de la diode électroluminescente rouge LD5 est voisin de celui de la borne négative de la source 214. Plus particulièrement, le multivibrateur 240 comporte deux portes NOR 243 et 244 reliées entre elles par une première de leurs deux entrées en 241 à l'anode de la diode LD5, la sortie de la porte 243 est reliée à la deuxième entrée de la porte 244 et la sortie de la porte 244 est reliée en série avec le dispositif piézoélectrique 242 à la borne négative de la source 214. Un condensateur C7 est relié par une armature à la sortie de la porte 244 et par l'autre armature au travers d'une résistance R23 à la sortie de la porte 243 et à la deuxième entrée de la porte 243. En l'absence de détection de signal représentatif d'une impulsion envoyée sur l'armature, la diode LD5 s'allume et l'anode de cette diode est à un potentiel suffisamment élevé pour interdire le fonctionnement du multivibrateur 240, donc l'émission d'un signal sonore.

A titre indicatif, les résistances R19, R20, R21, R22, R23 et R24 ont pour valeurs, dans l'exemple de réalisation décrit : R19 = 470 KΩ, R20 = 180 KΩ, R21 = 470 KΩ, R21 = 470 KΩ, R22 = 1 MΩ, R23 = 100 KΩ, R24 = 180 KΩ. C7 a pour capacité 1 nF.

Conformément à une caractéristique avantageuse de l'invention, le détecteur 200 comporte des moyens pour mesurer l'intervalle de temps séparant l'émission de deux impulsions consécutives. Ainsi, on peut émettre simultanément sur plusieurs câbles d'un faisceau au moyen de plusieurs dispositifs injecteurs de courant 100 tels que décrits précédemment, réglés sur des cadences d'émission différentes grâce au sélecteur 121 et mesurer, au moyen d'un seul détecteur 200, l'intervalle de temps séparant l'émission de deux impulsions consécutives sur le câble testé, en vue de l'identifier. On peut également émettre sur le câble des impulsions de polarités opposées et regrouper au sein d'un même boîtier deux détecteurs alimentés indépendamment (masses électriques distinctes) et connectés de façon inversée aux bornes de la pince 213.

Dans l'exemple de réalisation décrit, les moyens pour mesurer l'intervalle de temps séparant l'émission de deux impulsions consécutives sont constitués par un chronomètre 230 connu en lui-même, alimenté en 236 par une source d'énergie électrique et comportant un interrupteur de remise à zéro 232, un interrupteur 231 de sélection du mode de fonctionnement du chronomètre et deux entrées 235 et 234 à relier électriquement pour provoquer le départ du chronométrage, l'arrêt du chronométrage s'effectuant en interrompant le contact électrique entre les entrées 234 et 235. Ces dernières sont reliées respectivement aux broches 10 et 11 de l'interrupteur 224, la broche 12 de commutation étant reliée d'une part en 216 à l'émetteur du transistor T5 et d'autre part par une résistance R25 à la borne négative de la source 214.

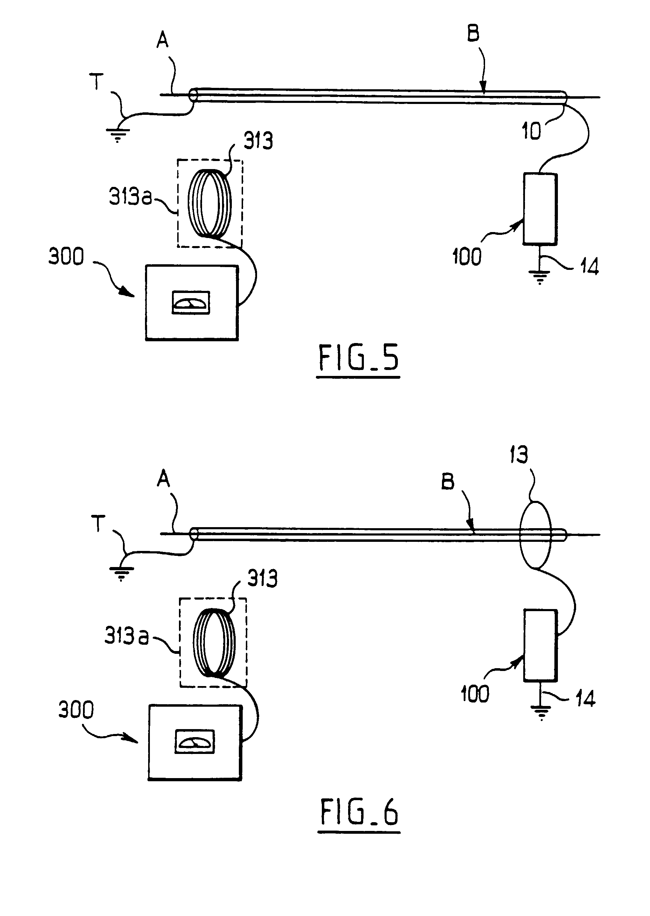

On a représenté sur les figures 5 et 6 un détecteur 300 conforme à l'invention, utilisé pour détecter à distance la présence d'un câble, c'est-à-dire dans un rayon de quelques mètres au maximum d'un point de réception.

Le détecteur 300 utilise, à la place de la pince ampèremétrique 213 de la réalisation précédente, un cadre bobiné 313 définissant le point de réception précité et présentant, dans l'exemple décrit, 10 000 spires de fil de 0,1 mm de diamètre. Le diamètre du cadre vaut 230 mm et son épaisseur 15 mm. Le cadre bobiné 313 est avantageusement monté à l'extrémité d'un support télescopique réglable angulairement, de manière à pouvoir placer le cadre vis-à-vis du lieu de passage des câbles dans une position où sa sensibilité est maximale. Le cadre bobiné 313 est en outre avantageusement muni d'un blindage électrique 313a constitué par une feuille d'aluminium de quelques centièmes de millimètres d'épaisseur, recouvrant les deux faces frontales du cadre ainsi que sa tranche. Dans l'exemple de réalisation décrit, le fil est bobiné sur un support en matière plastique entre deux flasques plans en matière plastique présentant chacun une épaisseur d'environ 1 mm. La feuille d'aluminium précitée est collée sur les faces externes des flasques et se trouve à une distance du fil bobiné choisie de sorte que les effets d'échos à l'intérieur du blindage en aluminium sont réduits au minimum. L'utilisation d'un blindage électrique en aluminium, perméable aux fréquences utiles pour la détection qui sont de l'ordre de la centaine de kHz dans l'exemple décrit, mais faisant écran en revanche aux fréquences plus grandes, permet de détecter un signal utile de très faible amplitude, voire inférieure à celle du bruit de fond.

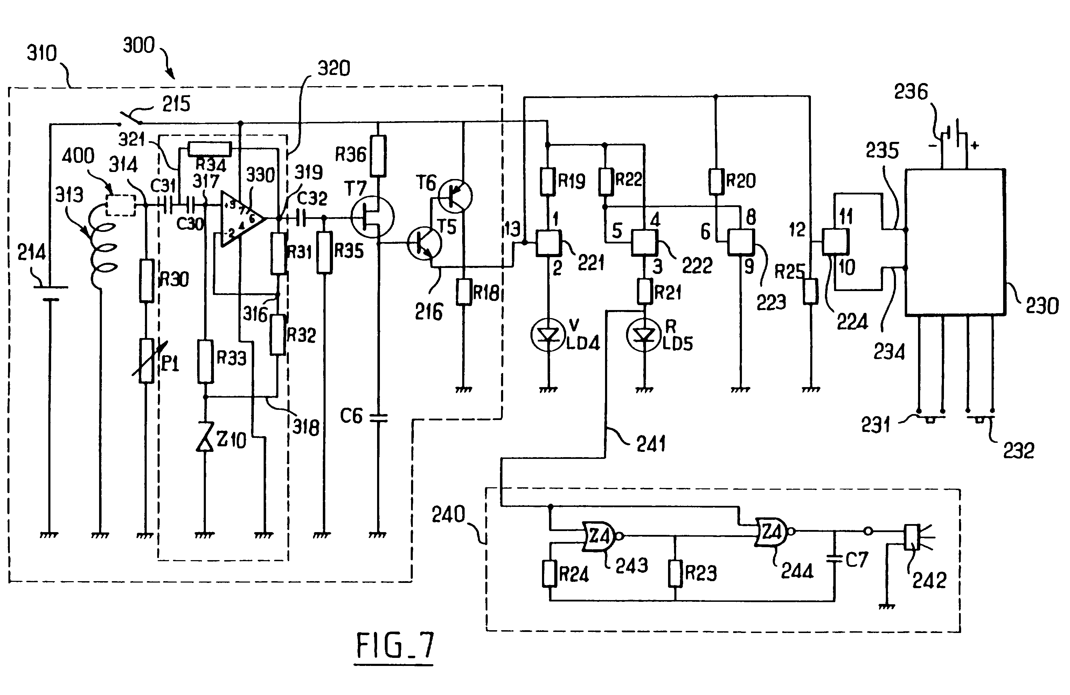

On a représenté sur la figure 7 le schéma du détecteur 300. Ce dernier est identique au détecteur 200 décrit précédemment en référence à la figure 4, sauf en ce qui concerne l'étage d'amplification 210, remplacé ici par un étage d'amplification 310 comprenant un filtre actif 320, destiné à filtrer le bruit dû au secteur et un amplificateur de tension constitué par un transistor à effet de champ T7. Les composants communs aux exemples de réalisation des figures 4 et 7 portent des références identiques et ne seront pas décrits à nouveau.

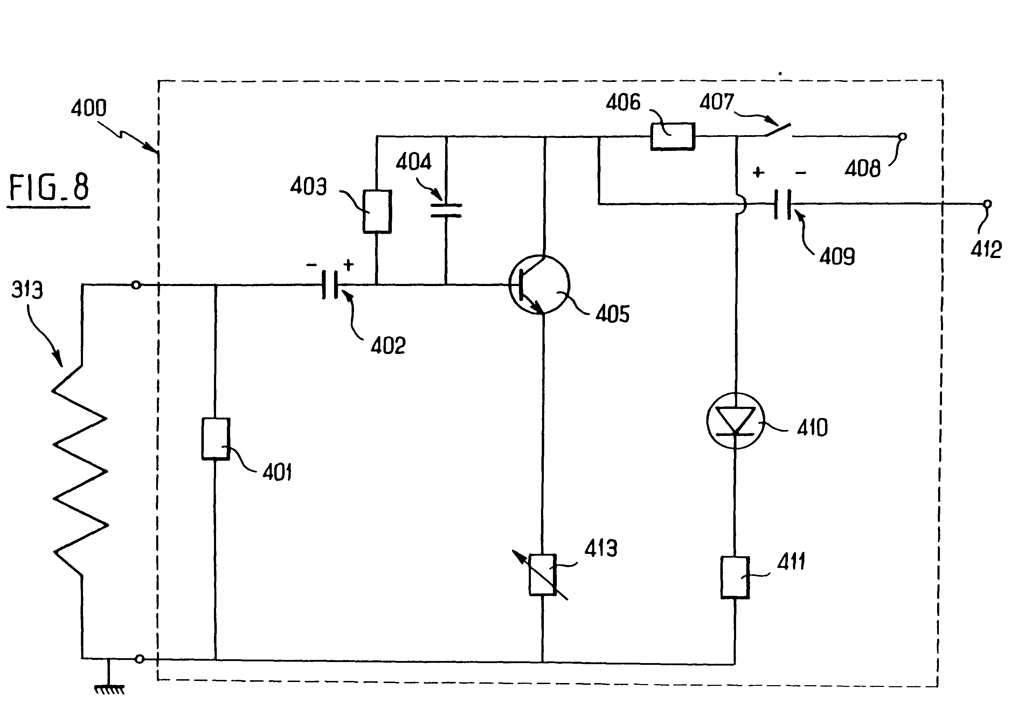

Le cadre bobiné 313 est relié à une borne à la masse et à l'autre, par l'intermédiaire d'un préamplificateur 400, à l'entrée 314 du filtre actif 320 et à un dispositif de réglage de la sensibilité, constitué par une résistance R30 montée en série avec un potentiomètre P1 dont une borne est à la masse et qui permet d'ajuster la sensibilité. A titre indicatif, dans l'exemple décrit, R30 vaut 2,7 KΩ et P1 vaut 100 KΩ. Le préamplificateur 400 comporte, comme représenté sur la figure 8, un transistor 405 dont l'émetteur est relié à la masse, par l'intermédiaire d'un potentiomètre 413, dont le collecteur est relié par l'intermédiaire d'un interrupteur 407 en série avec une résistance 406 à la borne positive de l'alimentation et dont la base est reliée, par l'intermédiaire d'un condensateur polarisé 402, au cadre bobiné 313. Une résistance 401 est disposée en parallèle avec les bornes du cadre bobiné 313. Une résistance 403 et un condensateur non polarisé 404 sont montés en parallèle entre la base et le collecteur du transistor 405. Une diode électroluminescente 410 est montée en série avec une résistance 411 entre la masse et la résistance 406 pour indiquer que le préamplificateur 400 est sous tension lorsque l'interrupteur 407 est fermé. Le signal préamplifié est prélevé, par l'intermédiaire d'un condensateur polarisé 409, sur le collecteur du transistor 405 et dirigé en 412 vers l'entrée 314 du filtre actif 320. A titre indicatif, le transistor 405 est du type npn connu sous la référence BC 238 C, la résistance 401 vaut 100 KΩ, la résistance 403 vaut 1 MΩ, la résistance 406 vaut 10 KΩ, la résistance 411 vaut 1 KΩ et le potentiomètre 413 vaut 3,3 KΩ. Ce dernier permet d'ajuster le gain de préamplification. Le condensateur 402 vaut 10 µF, le condensateur 404 vaut 4,7 pF, et le condensateur 409 vaut 2,2 µF.

Le filtre actif 320 comporte un amplificateur opérationnel 330, du type connu sous la référence TL 081, dont l'entrée inverseuse portant le numéro 2 est reliée au point commun 316 de deux résistances R31 et R32, et l'entrée non inverseuse, au point commun 317 d'une résistance R33 et d'un condensateur C30. La résistance R33 est reliée à sa borne opposée au point commun 317 à la cathode d'une diode Zéner Z10, dont l'anode est reliée à la masse, et en 318, à la borne de la résistance R32 opposée au point commun 316. La sortie de l'amplificateur 330 est reliée en 319 à la borne de la résistance R31 opposée au point commun 316, à la grille du transistor T7 par l'intermédiaire d'un condensateur C32 de couplage et, par l'intermédiaire d'une résistance R34, à la borne du condensateur C30 opposée au point commun 317. Cette dernière est reliée, par l'intermédiaire d'un condensateur C31, au cadre bobiné 313. La grille du transistor T7 est reliée par une résistance de polarisation R35 à la masse. Le drain du transistor T7 est relié par une résistance R36 à la borne positive de l'alimentation électrique 214 et la source du transistor T7 est directement reliée à la base du transistor T5 et, par l'intermédiaire du condensateur C6, à la masse.

A titre indicatif, dans l'exemple de réalisation décrit, T7 est du type connu sous la référence BF 245, R36 vaut 27 Ω, R35 vaut 1 MΩ, R31 vaut 32 kΩ, R32 vaut 47 kΩ, C31 vaut 1 nF, C30 vaut 470 nF, R34 vaut 10 kΩ et C32 vaut 10 nF.

Le détecteur 300 s'utilise lors de l'injection qui s'effectue directement sur l'un des conducteurs comme représenté sur la figure 5, ou par induction comme représenté sur la figure 6, d'une impulsion sur un câble choisi, au moyen du dispositif 100 utilisé comme décrit précédemment. Le cadre bobiné 313 du détecteur 300 est placé par exemple dans un local où l'on désire vérifier la présence du câble.

L'impulsion émise sur le câble est captée à distance par le cadre bobiné 313 puis amplifiée, et provoque l'allumage de la diode électroluminescente LD4 lorsque l'amplitude du signal délivré par le cadre bobiné 313 est suffisante, c'est-à-dire lorsque le cadre bobiné 313 est suffisamment proche de l'armature du câble sur laquelle se propage l'impulsion électrique émise par le dispositif d'injection 100.

Finalement, l'invention permet le suivi du parcours et l'identification de câbles en service, l'impulsion émise sur l'armature du câble n'entraînant pas de perturbation des installations reliées à l'âme de ce câble, de sorte que le procédé selon l'invention peut être avantageusement mis en oeuvre pour l'identification et le suivi du parcours de câbles importants pour la sûreté dans une centrale nucléaire.

## Revendications

1. Procédé pour détecter la présence d'un câble électrique et, le cas échéant, l'identifier, ce câble électrique comprenant une armature (B) conductrice et une âme (A) conductrice isolée électriquement de l'armature, dans lequel de façon caractéristique on relie ladite armature à la terre (T), on émet une impulsion de courant sur l'armature au moyen d'un dispositif injecteur de courant (100) relié à la terre de sorte que le retour de cette impulsion vers le dispositif injecteur s'effectue par la terre et on détermine la présence du câble à proximité d'un point de réception, par la détection en ce point d'un signal représentatif de cette impulsion au moyen d'un détecteur (200 ; 300).

2. Procédé selon la revendication 1, caractérisé en ce que ladite impulsion de courant est obtenue par la décharge d'un condensateur (C5).

3. Procédé selon l'une des revendications 1 et 2, caractérisé en ce que l'émission de ladite impulsion de courant s'effectue à une cadence déterminée et en ce que le détecteur (200 ; 300) comporte des moyens (230) pour mesurer l'intervalle de temps séparant l'émission de deux impulsions consécutives.

4. Procédé selon la revendication 3, caractérisé en ce que l'intervalle de temps séparant chaque émission d'impulsion est supérieur à 1 seconde.

5. Procédé selon l'une des revendications 1 à 4, caractérisé en ce que ladite émission se fait par injection directe sur l'armature.

6. Procédé selon l'une des revendications 1 à 4, caractérisé en ce que ladite émission se fait par induction sur l'armature.

7. Procédé selon l'une des revendications 1 à 6, caractérisé en ce que la détection de ladite impulsion se fait au moyen d'un bobinage (213) traversé par ledit câble électrique, en vue d'identifier le câble.

8. Procédé selon l'une des revendications 1 à 6, caractérisé en ce que la détection de ladite impulsion se fait au moyen d'un bobinage (313) placé à proximité dudit câble électrique.

9. Procédé selon la revendication 8, caractérisé en ce que le bobinage (313) est placé à l'intérieur d'un blindage électrique (313a) constitué par une feuille d'aluminium.

10. Procédé selon l'une des revendications 1 à 9, caractérisé en ce que la durée de ladite impulsion est inférieure à 10 µs.

11. Procédé selon l'une des revendications 1 à 10, caractérisé en ce que l'intensité maximale du courant induit sur le câble est inférieure à 25 A.

12. Dispositif pour détecter la présence d'un câble électrique et, le cas échéant, l'identifier, ce câble électrique comprenant une armature conductrice et une âme conductrice isolée électriquement de l'armature, caractérisé en ce qu'il comporte un dispositif injecteur de courant (100) destiné à émettre une impulsion de courant sur l'armature en un point d'injection, ce dispositif injecteur de courant étant relié à la terre, de sorte que le retour de l'impulsion de courant vers le dispositif injecteur s'effectue par la terre et un détecteur (200 ; 300) destiné à détecter en un point de réception éloigné du point d'injection, à proximité du trajet de l'impulsion de courant, un signal représentatif de ladite impulsion.

13. Dispositif selon la revendication 12, caractérisé en ce qu'il est destiné à détecter la présence dans un local d'un câble électrique donné, en service, notamment dans une centrale nucléaire.

14. Dispositif selon la revendication 13, caractérisé en ce que le détecteur (300) comporte un cadre bobiné (313) placé à l'intérieur d'un blindage électrique (313a) constitué par une feuille d'aluminium.

15. Dispositif selon la revendication 12, caractérisé en ce qu'il est destiné à l'identification de câbles électriques en service, notamment dans une centrale nucléaire.

## Claims

1. A method of detecting the presence of an electric cable, and where appropriate for identifying it, said electric cable comprising armoring (B) that is conductive and a conductive core (A) that is electrically insulated from the armoring, in which, in characteristic manner, said armoring is connected to ground (T), a current pulse is emitted over the armoring by means of a current injector apparatus (100) connected to ground so that the return for said pulse to said injector apparatus takes place via ground, and the presence of the electric cable in the vicinity of a reception point is determined by detecting, at said point, a signal representative of said pulse, by means of a detector (200; 300).

2. A method according to claim 1, characterized in that said current pulse is obtained by discharging a capacitor (C5).

3. A method according to claim 1 or 2, characterized in that said current pulse is emitted at a determined rate, and in that the detector (200; 300) includes means (230) for measuring the time interval between the emission of two consecutive pulses.

4. A method according to claim 3, characterized in that the time interval between the emission of each pulse is greater than 1 second.

5. A method according to any one of claims 1 to 4, characterized in that said emission takes place by direct injection to the armoring.

6. A method according to any one of claims 1 to 4, characterized in that said emission takes place by induction to said armoring.

7. A method according to any one of claims 1 to 6, characterized in that said pulse is detected by means of a coil (213) through which said electric cable passes, for the purpose of identifying the cable.

8. A method according to any one of claims 1 to 6, characterized in that said pulse is detected by means of a coil (313) placed in the proximity of said electric cable.

9. A method according to claim 8, characterized in that the coil (313) is placed inside electrical screening (313a) constituted by aluminum foil.

10. A method according to any one of claims 1 to 9, characterized in that the duration of said pulse is less than 10 µs.

11. A method according to any one of claims 1 to 10, characterized in that the maximum current induced in the cable is less than 25 A.

12. Apparatus for detecting the presence of an electric cable, and where appropriate for identifying it, said electric cable comprising conductive armoring and a conductive core that is electrically insulated from the armoring, the apparatus being characterized in that it includes current injector apparatus (100) for emitting a current pulse over the armoring from an injection point, said current injector apparatus being connected to ground such that the return for the current pulse to the injector apparatus takes place via ground, and a detector (200; 300) for detecting at a reception point remote from the injection point and in the proximity of the path of the current pulse, a signal representative of said pulse.

13. Apparatus according to claim 12, characterized in that it is designed to detect the presence in premises of a given electric cable, that is in service, in particular in a nuclear power station.

14. Apparatus according to claim 13, characterized in that the detector (300) includes a coil frame (313) placed inside electrical screening (313a) constituted by aluminum foil.

15. Apparatus according to claim 12, characterized in that it is designed for identifying electrical cables that are in service, in particular in a nuclear power station.

## Patentansprüche

1. Verfahren zum Detektieren der Anwesenheit eines elektrischen Kabels und gegebenenfalls zum Identifizieren desselben, wobei das elektrische Kabel einen leitfähigen Mantel (B) und eine leitfähige Seele (A) aufweist, die elektrisch von dem Mantel isoliert ist, welches dadurch gekennzeichnet ist, daß man den Mantel mit der Erde (T) verbindet, man mit Hilfe einer Strom-Einspeisungseinrichtung (100), die mit der Erde verbunden ist, ein Strompuls in den Mantel sendet, so daß die Rückkehr des Pulses zur Einspeisungseinrichtung über die Erde erfolgt, und man die Anwesenheit des Kabels in der Nähe einer Empfangsstelle durch die Detektion eines für diesen Strompuls repräsentativen Signals an dieser Stelle mit Hilfe eines Detektors (200; 300) bestimmt.

2. Verfahren nach Anspruch 1, dadurch gekennzeichnet, daß der Strompuls durch das Entladen eines Kondensators (C5) erhalten wird.

3. Verfahren nach einem der Ansprüche 1 oder 2, dadurch gekennzeichnet, daß die Aussendung des Strompulses mit einem bestimmten Takt erfolgt, und daß der Detektor (200; 300) Mittel (230) zum Messen des Zeitintervalls, das die Aussendung von zwei aufeinander-folgenden Pulsen trennt, aufweist.

4. Verfahren nach Anspruch 3, dadurch gekennzeichnet, daß das Zeitintervall, das jede Puls-Aussendung trennt, größer als 1 Sekunde ist.

5. Verfahren nach einem der Ansprüche 1 bis 4, dadurch gekennzeichnet, daß das Aussenden durch direkte Einspeisung in den Mantel ausgeführt wird.

6. Verfahren nach einem der Ansprüche 1 bis 4, dadurch gekennzeichnet, daß das Aussenden durch Induktion auf den Mantel ausgeführt wird.

7. Verfahren nach einem der Ansprüche 1 bis 6, dadurch gekennzeichnet, daß die Detektion des Pulses mit Hilfe einer Spule (213) ausgeführt wird, die von dem elektrischen Kabel durchquert wird, um das Kabel zu identifizieren.

8. Verfahren nach einem der Ansprüche 1 bis 6, dadurch gekennzeichnet, daß die Detektion des Pulses mit Hilfe einer Spule (313) ausgeführt wird, die in der Nähe des elektrischen Kabel angeordnet ist.

9. Verfahren nach Anspruch 8, dadurch gekennzeichnet, daß die Spule (313) im Inneren einer elektrischen Abschirmung (313a) angeordnet ist, die aus einer Aluminiumfolie gebildet ist.

10. Verfahren nach einem der Ansprüche 1 bis 9, dadurch gekennzeichnet, daß die Dauer des Pulses kleiner als 10 µs ist.

11. Verfahren nach einem der Ansprüche 1 bis 10, dadurch gekennzeichnet, daß die maximale Stromstärke des auf dem Kabel induzierten Stroms kleiner als 25 A ist.

12. Vorrichtung zum Detektieren der Anwesenheit eines elektrischen Kabels und gegebenenfalls zum Identifizieren desselben, wobei das elektrische Kabel einen leitfähigen Mantel und eine leitfähige Seele aufweist, die elektrisch von dem Mantel isoliert ist, dadurch gekennzeichnet, daß sie folgendes aufweist: eine Strom-Einspeisungseinrichtung (100), die dafür bestimmt ist, an einer Einspeisungsstelle einen Strompuls in den Mantel zu senden, wobei die Strom-Einspeisungseinrichtung mit der Erde verbunden ist, so daß die Rückkehr des Strompulses zur Einspeisungseinrichtung über die Erde erfolgt, sowie einen Detektor (200; 300), der dafür bestimmt ist, an einer von der Einspeisungsstelle entfernt liegenden Empfangsstelle, die in der Nähe der Bahn des Strompulses liegt, ein für den Strompuls repräsentatives Signal zu detektieren.

13. Vorrichtung nach Anspruch 12, dadurch gekennzeichnet, daß sie dafür bestimmt ist, an einem Ort die Anwesenheit eines gegebenen, in Betrieb befindlichen elektrischen Kabels, insbesondere in einem Kernkraftwerk zu detektieren.

14. Vorrichtung nach Anspruch 13, dadurch gekennzeichnet, daß der Detektor (300) eine gewickelte Spule (313) aufweist, die im Inneren einer elektrischen Abschirmung (313a) angeordnet ist, die aus Aluminiumfolie gebildet ist.

15. Vorrichtung nach Anspruch 12, dadurch gekennzeichnet, daß sie zur Identifikation von in Betrieb befindlichen elektrischen Kabeln, insbesondere in einem Kernkraftwerk bestimmt ist.
